# EUROPÄISCHE PATENTSCHRIFT

(11) **EP 1 432 889 B1**
(45) Veröffentlichungstag und Bekanntmachung des Hinweises auf die Patenterteilung: **12.07.2006**
(21) Anmeldenummer: 02762728.0
(22) Anmeldetag: 30.09.2002
(51) Int. Cl.: F01K 23/10, F01K 21/04

(54) **VERFAHREN UND VORRICHTUNG ZUM ANFAHREN VON EMISSIONSFREIEN GASTURBINENKRAFTWERKEN**
METHOD AND DEVICE FOR THE STARTING OF EMISSION-FREE GAS TURBINE POWER STATIONS
PROCEDE ET DISPOSITIF PERMETTANT DE DEMARRER DES CENTRALES THERMIQUES A GAZ EXEMPTES D'EMISSIONS

(30) Priorität: 01.10.2001 CH 180901
(43) Veröffentlichungstag der Anmeldung: 30.06.2004
(73) Patentinhaber: Alstom Technology Ltd, 5400 Baden (CH)
(72) Erfinder: FRUTSCHI, Hans, Ulrich, CH-5223 Riniken (CH); GRIFFIN, Timothy, CH-5408 Ennetbaden (CH); HOLMBERG, Daniel, 262-43 Angelholm (SE); SPAN, Roland, 33106 Paderborn-Sande (DE)
(86) Internationale Anmeldenummer: PCT/IB2002/004006
(87) Internationale Veröffentlichungsnummer: WO 2003/029618

(56) Entgegenhaltungen:
- EP-A- 0 939 199
- WO-A-01/90548
- WO-A-99/25957
- YULIN SHAO ET AL: "NATURAL GAS FIRED COMBINED CYCLE POWER PLANT WITH CO2 CAPTURE" ENERGY CONVERSION AND MANAGEMENT, ELSEVIER SCIENCE PUBLISHERS, OXFORD, GB, Bd. 36, Nr. 12, 1. Dezember 1995 (1995-12-01), Seiten 1115-1128, XP000529061 ISSN: 0196-8904

## Beschreibung

### TECHNISCHES GEBIET

Die vorliegende Erfindung betrifft eine Krafterzeugungsanlage aufweisend wenigstens einen Gasturbinenkreislauf mit Abhitzekessel und wenigstens einen über den Abhitzekessel betriebenen Dampfturbinenkreislauf, wobei der Gasturbinenkreislauf halb geschlossen und im wesentlichen emissionsfrei ausgebildet ist und im wesentlichen aus einem Verdichter, einer stromab des Verdichters angeordneten Brennkammer, einer stromab der Brennkammer angeordneten Gasturbine, einem stromab der Gasturbine angeordneten Abhitzekessel, sowie wenigstens einem an die Gasturbine angekoppelten Generator besteht. Die Erfindung betrifft ausserdem Verfahren zur Inbetriebnahme und zum Betrieb einer derartigen Krafterzeugungsanlage.

### STAND DER TECHNIK

Im Rahmen der allgemeinen Bestrebungen, Kraftwerke zu entwickeln, welche eine möglichst geringe Umweltbelastung darstellen, gibt es eine Vielzahl von verschiedenen Projekten, deren Ziel die Entwicklung emissionsfreier Gasturbinenkraftwerke mit einem halb geschlossenen CO₂ / H₂O Kreislauf ist. Dabei wird das als Brennstoff verwendete Erdgas mit möglichst reinem Sauerstoff verbrannt. Unter diesen Umständen entstehen Verbrennungsgase, die praktisch nur aus Kohlendioxid und Wasser bestehen. Kondensiert man das Wasser aus dem Arbeitsmedium aus, so erhält man weitgehend reines Kohlendioxid, das durch Kompression verflüssigt und auf unterschiedliche Art und Weise verwendet oder entsorgt werden kann.

Zur Nutzung der hohen Temperaturen am Turbinenaustritt wird i.d.R. ein Dampferzeuger vorgesehen, wobei der entstehende Dampf benutzt wird, um eine Kondensationsturbine anzutreiben (bottoming steam turbine). Da die Turbinenaustrittstemperatur bei üblichen Druckverhältnissen für CO₂/H₂O-Gemische höher ist als bei konventionellen Gasturbinen, liefert der Dampfkreislauf bei derartigen Systemen bis zu etwa 50% der Gesamtleistung.

Alternativ kann der erzeugte Dampf in einer Gegendruckturbine vorentspannt werden (topping steam turbine), um dann vor, in oder hinter der Brennkammer mit dem Arbeitsmedium der Gasturbine vermischt zu werden. Der eingespritzte Dampf kann dann nach Durchströmen des Abhitzekessels zusammen mit dem durch die Verbrennung entstandenen Wasser auskondensiert werden. Beide Konzepte werden im Patent EP 0 731 255 B1 detaillierter beschrieben.

Weiterer Stand der Technik ist in der Schrift EP 0 939 199 A zu finden.

Der Einsatz emissionsfreier Gasturbinenkraftwerke wird heute insbesondere im Bereich der Oel- und Gasindustrie erwogen, da das separierte Kohlendioxid dort in grossem Umfang verwendet werden kann (Enhanced Oil Recovery, EOR) und zum Teil bereits empfindliche Steuern für emittiertes Kohlendioxid gezahlt werden müssen. In der Oel- und Gasindustrie werden Kraftwerke aber häufig in einem Umfeld betrieben, in dem der Bezug von Anfahrleistung aus dem Netz schwierig oder nicht möglich ist (entlegene küstennahe Standorte, Bohrinseln, etc.). Diese Problematik wird bei emissionsfreien Kraftwerken des oben beschriebenen Typs dadurch erschwert, dass vor dem Anfahren der Turbine eine zumeist kryogen ausgeführte Luftzerlegungsanlage angefahren werden muss, die während eines

Zeitraums von 2 bis 4 Stunden etwa 10% der Netzleistung des Kraftwerks benötigt, um einen stabilen Betriebspunkt zu erreichen.

Für einen autarken Anfahrvorgang kann bei konventionellen Gasturbinenkraftwerken Strom benutzt werden, der von den Generatoren der integrierten Dampfturbinen erzeugt wird. Als Beispiel hierfür kann eine Anordnung gemäss US Patent 5,148,668 herangezogen werden, bei welcher ein während des Betriebs aufgeladener Heisswasserspeicher den zum Anfahren benötigten Dampf liefert. Um über längere Zeit den benötigten Dampf bereitzustellen, ist in dieser Patentschrift eine Zusatzfeuerung des Heisswasserspeichers vorgesehen. Weil für emissionsfreie Kraftwerke kein schneller Start möglich ist, kann nicht auf das Konzept der Verwendung eines Heisswasserspeichers zurückgegriffen werden.

### DARSTELLUNG DER ERFINDUNG

Es ist daher Aufgabe der Erfindung, eine emissionsfreie, halb geschlossene Kraftwerksanlage der obengenannten Art, das heisst gemäss dem Oberbegriff des Patentanspruchs 1, zur Verfügung zu stellen, welche Kraftwerksanlage einen Betrieb und ein Anfahren mit minimaler Anfahrleistung.

Die vorliegende Erfindung löst diese Aufgabe, indem erste Mittel angeordnet werden, welche es erlauben, alternativ oder ergänzend Heissgas in den Heissgaspfad zwischen Gasturbine und Abhitzekessel einzuschleusen, und indem zweite Mittel angeordnet werden, welche es erlauben, alternativ oder ergänzend stromab des Abhitzekessels Abgas aus dem Abgaspfad auszuschleusen.

Diese überraschend einfache Modifikation des Gasturbinenkreislaufes erlaubt die Beheizung des Abhitzekessels bei stillstehender oder noch nicht (oder auch nicht mehr) genügend leistungsfähiger Turbogruppe, derart, dass der Dampfturbinenkreislauf energieerzeugend respektive insbesondere stromerzeugend betrieben werden kann. Mit anderen Worten wird der im normalen Betrieb von einem Abgasgemisch der Gasturbinenanlage durchströmte Abhitzekessel als hilfsbefeuerter Dampferzeuger betrieben. Die Generatoren der mit dem so erzeugten Dampf beaufschlagten Dampfturbinen erzeugen bei entsprechender Auslegung der Hilfsbefeuerung genügend Strom um sowohl eine ggf. für die Versorgung mit reinem Sauerstoff vorhandene Luftzerlegungsanlage als auch die Gasturbine anfahren zu können. Die Modifikation erlaubt es ausserdem, den Dampfturbinenkreislauf allein stromerzeugend zu betreiben, und die Anlage kann somit auch die Funktion eines Notstromaggregates übernehmen, was beispielsweise während eventueller Ausfallzeiten von Luftzerlegungsanlage und/oder Gasturbine notwendig werden kann. Üblicherweise wird dabei das aus dem Abgaspfad ausgeschleuste Abgas über einen Hilfskamin abgeführt.

Gemäss einer ersten, besonders einfachen und bevorzugten Ausführungsform der Erfindung handelt es sich bei den ersten und zweiten Mitteln um Umschaltorgane, welche das Ein- respektive Ausschleusen insbesondere über das Umstellen von Luftklappen erlauben.

Gemäss einer weiteren Ausführungsform der Erfindung wird das zusätzliche, alternativ oder ergänzend in den Heissgaspfad einzuschleusende Heissgas von einem oder mehreren Hilfsbrennern zur Verfügung gestellt, welche bevorzugt über ein Gebläse mit Frischluft versorgt werden. Grundsätzlich ist es aber auch möglich, das Heissgas auf andere Art und Weise zur Verfügung zu stellen, beispielsweise über Wärmetauscher, Katalysatoren, etc..

Vorteilhafterweise wird die erfindungsgemässe Krafterzeugungsanlage als CO₂/H₂O-Anlage betrieben, das heisst es handelt sich dabei um einen CO₂/H₂O-Gasturbinenkreislauf, bei welchem entstehendes CO₂ und H₂O über entsprechende Mittel zur Kompression und/oder Mittel zur Kühlung aus dem Gasturbinenkreislauf insbesondere bevorzugt unmittelbar stromab des Verdichters abzweigend und insbesondere in fester und/oder flüssiger Form entfernt wird, wobei der Gasturbinenkreislauf insbesondere über eine Luftzerlegungsanlage mit weitgehend reinem Sauerstoff versorgt wird. Dabei kann es die Luftzerlegungsanlage kryogen oder auf Membranverfahren basierend ausgebildet sein.

Gemäss einer anderen bevorzugten Ausführungsform der Erfindung ist der Dampfturbinenkreislauf im wesentlichen geschlossen ausgebildet und weist wenigstens eine Dampfturbine und wenigstens einen daran angekoppelten Generator auf. Dabei kann der Dampfturbinenkreislauf unter alleiniger Verwendung von über die ersten Mittel eingeschleustem Heissgas bei gleichzeitiger Abführung der Abgase über die zweiten Mittel derart betrieben werden, dass der Generator genügend Energie erzeugt, um die Gasturbinenanlage und eine ggf. vorhandene Luftzerlegungsanlage in Betrieb zu nehmen, respektive um bei Ausfall der Gasturbinenanlage als Notstromaggregat zu dienen. Um den besonderen Bedürfnissen beim Anfahren respektive beim Betrieb als Notstromaggregat gerecht zu werden, kann ausserdem vorzugsweise ein weiteres Umschaltorgan stromauf des Verdichters angeordnet werden, über welches Umgebungsluft angesaugt werden kann.

Je nach Bedürfnissen kann die im Dampfturbinenkreislauf angeordnete Dampfturbine als Kondensationsturbine ausgestaltet sein oder als Gegendruckturbine, deren teilentspannter Abdampf in der Gasturbine nach Einspritzung in das Kreislaufmedium vor, in, und/oder nach der Brennkammer unter Leistungsabgabe bis auf Umgebungsdruck entspannt wird, wobei insbesondere ein Umschaltorgan vorgesehen ist, mit welchem der Abdampf an der Gasturbine vorbei direkt zur Verflüssigung in einen im Gasturbinenkreislauf angeordneten Kühler geleitet werden kann.

Weitere bevorzugte Ausführungsformen der erfindungsgemässen Kraftwerksanlage sind in den abhängigen Patentansprüchen beschrieben.

Die vorliegende Erfindung betrifft ausserdem ein Verfahren zur Inbetriebnahme einer Krafterzeugungsanlage wie sie oben beschrieben ist, welches dadurch gekennzeichnet ist, dass zunächst in einer ersten Phase der Dampfturbinenkreislauf mit über die ersten Mittel eingeschleustem Heissgas bei gleichzeitiger wenigstens teilweiser Ausschleusung der Abgase über die zweiten Mittel in Betrieb genommen wird, dann in einer zweiten Phase ein im Dampfturbinenkreislauf angeordneter Generator den Generator des Gasturbinenkreislaufs motorisch mit Strom zum Anfahren der Turbogruppe antreibt, wobei der Verdichter über eine stromauf angeordnete Luftklappe und/oder über die in beide Richtungen geöffneten zweiten Mittel Frischluft oder ein Verbrennungsgasgemisch ansaugt, durch die Brennkammer fördert, in welcher ggf. unter zusätzlicher Zufuhr von weitgehend reinem Sauerstoff Brennstoff verfeuert wird, sodass die Gasturbine den motorisch angetriebenen Generator zu unterstützen beginnt, und schliesslich als alleiniger Antrieb dient, wobei die heißen Abgase der Gasturbine sukzessive und am Ende vollständig die Dampferzeugung im Abhitzekessel übernehmen. Die Trennung in einzelne Phasen ist dabei nicht absolut strikt zu sehen, eine entsprechende optimale Führung des Anfahrprozesses mit teilweise überlappenden Abschnitten kann vom Fachmann ermittelt werden.

Des Weiteren betrifft die vorliegende Erfindung ein Verfahren zur Inbetriebnahme einer Krafterzeugungsanlage wie sie oben beschrieben ist, gekennzeichnet dadurch, dass zunächst in einer ersten Phase der Dampfturbinenkreislauf mit über die ersten Mittel eingeschleustem Heissgas bei gleichzeitiger wenigstens teilweiser Ausschleusung der Abgase über die zweiten Mittel in Betrieb genommen wird, dass nach erfolgtem Selbstlauf der über eine stromauf des Verdichters angeordnete Luftklappe mit Luft als Ersatzmedium betriebenen Turbogruppe in einer zweiten Phase über die ersten und zweiten Mittel und die Luftklappe der Gasturbinenkreislauf geschlossen und der Brennkammer weitgehend reiner Sauerstoff als Oxidationsmittel zugeführt wird, wobei kontinuierlich Gas aus dem Kreislauf ausgeschleust wird, um die Zufuhr von Sauerstoff und Brennstoff zu kompensieren, und wobei sich die Zusammensetzung des umlaufenden Gases sukzessive einem Gleichgewicht nähert, in dem mit der Separation und Verflüssigung der Verbrennungsprodukte begonnen werden kann. Das Gleichgewicht ist dabei dann erreicht, wenn das Verbrennungsgasgemisch im wesentlichen nur noch aus CO₂ und H₂O besteht und kein Stickstoff, Sauerstoff o.ä., die den Kondensationsprozess des CO₂ stören könnten, mehr vorhanden sind. Dabei kann der nach der ersten Phase über den Generator verfügbare Strom wenigstens teilweise zum Betrieb der Luftzerlegungsanlage und damit zur Bereitstellung von weitgehend reinem Sauerstoff für den Verbrennungsprozess in der Brennkammer verwendet werden.

Die erfindungsgemässe Kraftwerksanlage kann ausserdem derart gefahren werden, dass bei nicht betriebenem Gasturbinenkreislauf nur der Dampfturbinenkreislauf über die Einschleusung von Heissluft mit den ersten Mitteln und über die Ausschleusung von Abgasen mit den zweiten Mitteln betrieben wird, und dass so der im Dampfturbinenkreislauf angeordnete Generator Strom insbesondere im Sinne eines Notstromaggregates zur Verfügung stellt.

Weitere bevorzugte Ausführungsformen der erfindungsgemässen Verfahren sind in den abhängigen Patentansprüchen beschrieben.

### KURZE ERLÄUTERUNG DER FIGUREN

Die Erfindung soll nachfolgend anhand von Ausführungsbeispielen im Zusammenhang mit den Figuren näher erläutert werden. Es zeigen:
- Fig. 1: ein Schema eines emissionsfreien Gasturbinenkraftwerkes nach dem Stand der Technik;
- Fig. 2: ein Schema eines erfindungsgemässen emissionsfreien Gasturbinenkraftwerkes mit Kondensationsturbine ; und
- Fig. 3: ein Schema eines erfindungsgemässen emissionsfreien Gasturbinenkraftwerkes mit Gegendruckturbine.

### WEGE ZUR AUSFÜHRUNG DER ERFINDUNG

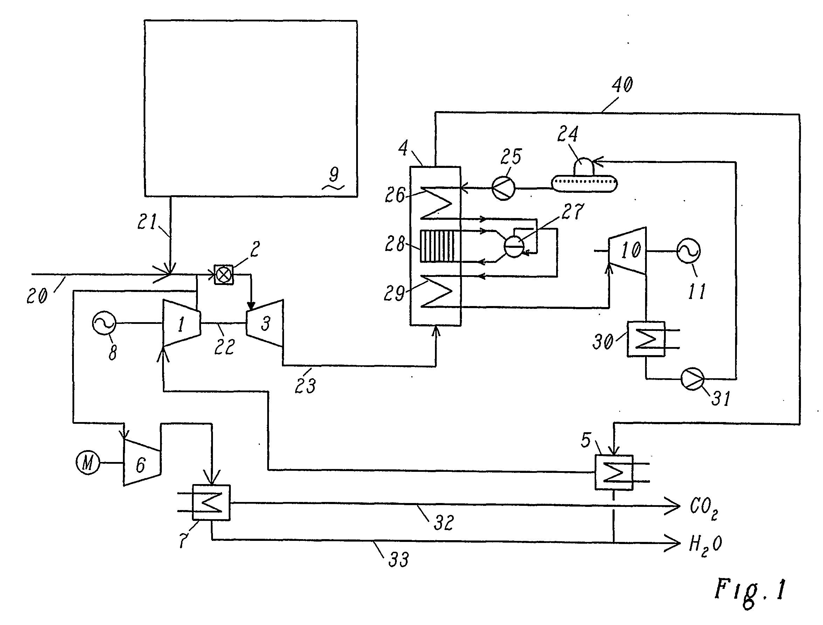

Fig. 1 zeigt das Schema eines emissionsfreien Kraftwerks mit CO₂/H₂O-Gasturbine und nachgeschaltetem Wasserdampfkreislauf mit Kondensationsturbine nach dem Stand der Technik. Ein CO₂/H₂O-Turbosatz, bestehend aus einem Verdichter 1, einer Brennkammer 2, einer Turbine 3 und einem auf einer gemeinsamen Welle 22 angeordneten Generator 8 ist über einen Abhitzekessel 4 und einen als Wärmesenke dienenden Kondensator 5 zu einem geschlossenen Kreislauf verschaltet. Die aus der Gasturbine 3 austretenden Heissgase werden über den Heissgaspfad 23 dem Abhitzekessel zugeführt, und die im Abhitzekessel 4 abgekühlten Abgase werden hinter dem Abhitzekessel 4 über den Abgaspfad 40 dem Kondensator 5 zugeführt. Bis zu einer durch die Kühlwassertemperatur vorgegebenen Grenze kann mit Hilfe des Kondensators 5 ein beliebiger Anteil des im Arbeitsmedium enthaltenen Wassers auskondensiert werden. Das durch die Verbrennung von z.B. Erdgas entstehende Kohlendioxid wird im stationären Betrieb von einem Kompressor 6 abgezweigt, auf den für die weitere Verwendung benötigten Druck gebracht, im Kühler 7 weiter getrocknet und verflüssigt, und aus dem Prozess über die Leitung 32 entfernt. In der Praxis wird dieser Verdichtungsprozess vorteilhaft mehrstufig mit Zwischenkühlung und - trocknung ausgeführt. Für die Oxidation des Brennstoffs in der Brennkammer 2 wird technisch reiner Sauerstoff eingesetzt; der in einer hier nicht weiter beschriebenen und nur schematisch dargestellten Luftzerlegungsanlage 9 gewonnen wird.

Der im Abhitzekessel gewonnene Wasserdampf beaufschlagt im Rahmen einer üblichen Kreislaufschaltung eine Kondensationsdampfturbine 10 mit Generator 11. Der Dampfkreislauf umfasst dabei die Kondensationsdampfturbine 10, stromab davon einen Kondensator 30, und dahinter eine Pumpe 31, welche das Kondensat einem Speisewasserbehälter/Entgaser 24 zuführt. Das Speisewasser wird hinter dem Speisewasserbehälter 24 über eine Pumpe einem im Abhitzekessel 4 angeordneten Economizer 26 und anschliessend der Dampftrommel 27 zugeführt. Die Dampftrommel 27 ist mit einem Verdampfer 28, welcher ebenfalls im Abhitzekessel angeordnet ist, verbunden, und der in der Dampftrommel 27 produzierte Dampf wird üblicherweise in einer Überhitzerstufe 29 überhitzt und anschliessend der Dampfturbine 10 zugeführt.

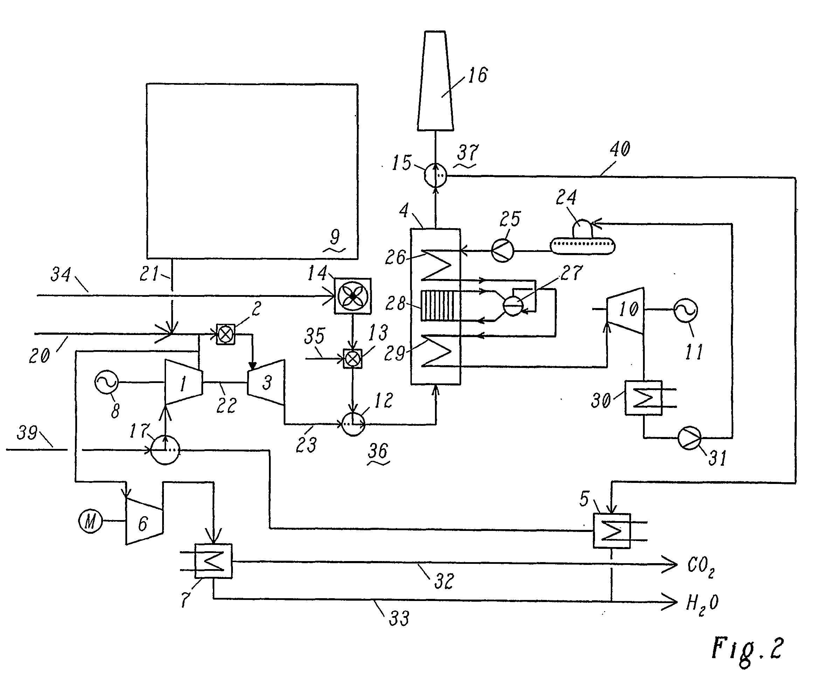

Um dieses System nun weitgehend autark anfahren zu können, wird die Anlage mit den in Fig. 2 dargestellten zusätzlichen Komponenten ausgerüstet. Durch Luftklappen oder ein anders realisiertes, im Heissgaspfad 23 angeordnetes Umschaltorgan 12 wird der Abhitzekessel 4 eintrittseitig vom Turbinenaustritt auf einen oder mehrere Hilfsbrenner 13 umgeschaltet, die von einem oder mehreren Gebläsen 14 mit Luft versorgt werden. Austrittseitig wird der Abhitzekessel durch ein weiteres, im Abgaspfad 40 angeordnetes Umschaltorgan 15 mit einem Hilfskamin 16 verbunden. Ueber diesen Kamin können die in der Brennkammer 13 entstandenen Rauchgase entweichen. Auf diese Weise kann im Abhitzekessel Dampf erzeugt werden, bevor die Gasturbinenanlage 1 - 3 in Betrieb genommen wird. Die Kondensationsturbine 10 kann nun über ihren Generator 11 den Strom erzeugen, der benötigt wird, um die Luftzerlegungsanlage 9 zu betreiben und die Gasturbine 1 - 3 anzufahren.

Zum Anfahren der Gasturbine wird bei beidseitig geöffneten Umschaltorganen 12 und 15 (d.h. Gas kann sowohl von 3 als auch von 13 über 12 in Richtung 4 strömen, bzw. von 4 über 15 sowohl in Richtung 16 als auch in Richtung 5) der Generator 8 motorisch angetrieben und der Brenner 2 mit Brennstoff und Sauerstoff aus der Luftzerlegungsanlage 9 in Betrieb genommen. Die Leistung der Hilfsbrenner 13 und Gebläse 14 wird kontinuierlich reduziert, bis die Abgase der Gasturbine eine ausreichend hohe Temperatur erreicht haben. Dann wird der Kreislauf mit Hilfe der Umschaltorgane 12 und 15 geschlossen. Alternativ kann die Anlage so ausgeführt werden, dass für das Anfahren der Gasturbine über ein weiteres Umschaltorgan 17 Umgebungsluft angesogen wird.

Nach Beendigung der Anfahrphase enthält der geschlossene Kreislauf zunächst ein typisches Verbrennungsgasgemisch mit hohem Stickstoff- und Sauerstoffgehalt. Um den Zustrom an Sauerstoff und Brennstoff auszugleichen, wird z.B. über den Hilfskamin 16 kontinuierlich ein Teil des im Kreislauf befindlichen Gases ausgeschleust. Nach kurzer Zeit nähert sich so die Zusammensetzung des Kreislaufgases einem stabilen Gleichgewicht mit den Hauptkomponenten Kohlendioxid und Wasser und die Anlage kann auf vollständig emissionsfreien Betrieb umgeschaltet werden.

Eine derartige modifizierte Kraftwerksanlage erlaubt ausserdem einen separaten Betrieb ausschliesslich des Dampfturbinenkreislaufes im Sinne eines Notstromaggregates. Dies kann beispielsweise notwendig werden, wenn die Gasturbinenanlage auf Grund eines Ausfalls der Luftzerlegungsanlage 9 ausser Betrieb genommen werden muss oder die Gasturbinenanlage aus anderen Gründen stillgelegt werden muss.

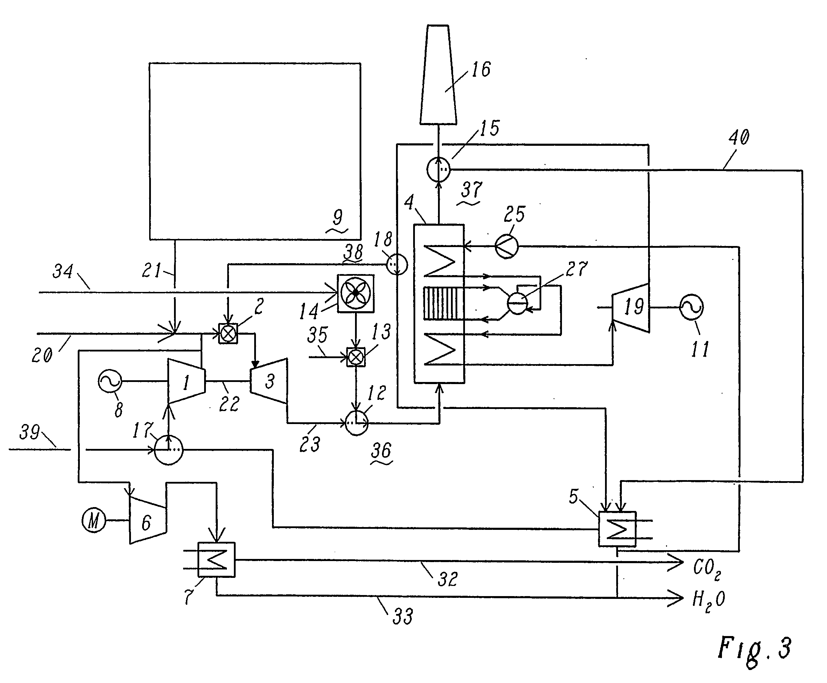

Fig. 3 zeigt eine sinngemäss ausgerüstete Anlage in der Ausführung mit einer Gegendruckturbine. Diese Anlage enthält zusätzlich ein Umschaltorgan 18, mit dem der in der Gegendruckturbine teilentspannte Dampf an der Gasturbine vorbei direkt zur Verflüssigung in den Kühler 5 geleitet wird. Alternativ kann der teilentspannte Dampf vor der Verflüssigung auch zum Vorwärmen des Kesselspeisewassers genutzt werden (dem Fachmann offensichtlich und daher in Fig. 3 nicht als zusätzliche Option schematisch dargestellt). Wird die Gasturbine 1-3 angefahren, so wird das Umschaltorgan 18 in seine normale Betriebsposition gebracht und der Dampf in der Gasturbine unter Leistungsabgabe bis auf Umgebungsdruck entspannt. Da die Gegendruckturbine bei gleichem Brennstoffverbrauch der Hilfsbrenner 13 erheblich weniger Leistung liefert als die Kondensationsturbine nach Fig. 2, eignet sich dieser Aufbau zum Anfahren von Luftzerlegungsanlage und Gasturbine, ist aber weniger für den Notfallbetrieb geeignet.

Für den technisch versierten Fachmann ist offensichtlich, dass sich das oben beschriebene Verfahren nicht nur auf die beiden beschriebenen Prozesse anwenden lässt, sondern ebenso auf eine Vielzahl denkbarer Prozessvarianten, die dadurch gekennzeichnet sind, dass eine Gas- und eine Dampfturbine so kombiniert werden, dass das Arbeitsmedium der Gasturbine in einem zumindest teilweise geschlossenen Kreislauf mit oder ohne Kondensation gefahren wird, dem Kreislauf weitgehend reiner Sauerstoff als Oxydationsmittel zugeführt wird, und der benötigte Dampf im normalen Betrieb durch Nutzung der Abwärme der Gasturbine erzeugt wird.

### BEZUGSZEICHENLISTE

- 1: Verdichter
- 2: Brennkammer
- 3: Turbine
- 4: Abhitzekessel
- 5: Kühler, Kondensator
- 6: Kompressor
- 7: Kühler
- 8: Generator
- 9: Luftzerlegungsanlage
- 10: Kondensationsdampfturbine
- 11: Generator
- 12: Umschaltorgan
- 13: Hilfsbrenner
- 14: Gebläse
- 15: Umschaltorgan
- 16: Hilfskamin
- 17: Umschaltorgan
- 18: Umschaltorgan
- 19: Gegendruckturbine
- 20: Brennstoffzufuhr
- 21: Sauerstoffzufuhr
- 22: Welle
- 23: Leitung zum Abhitzekessel, Heissgaspfad
- 24: Speisewasserbehälter
- 25: Pumpe
- 26: Economizer
- 27: Dampftrommel
- 28: Verdampfer
- 29: Überhitzer
- 30: Kondensator
- 31: Pumpe
- 32: Abführleitung für Kohlendioxid
- 33: Abführleitung für Wasser
- 34: Frischluftzufuhr
- 35: Brennstoffzufuhr
- 36: variabler Heissgaspfad
- 37: variabler Abgaspfad
- 38: variabler Dampfpfad
- 39: Frischluftzufuhr, Frischluft
- 40: Leitung zum Kondensator 5, Abgaspfad

## Patentansprüche

1. Krafterzeugungsanlage aufweisend wenigstens einen Gasturbinenkreislauf mit Abhitzekessel (4) und wenigstens einen über den Abhitzekessel (4) betriebenen Dampfturbinenkreislauf, wobei der Gasturbinenkreislauf halb geschlossen und im wesentlichen emissionsfrei ausgebildet ist und im wesentlichen aus einem Verdichter (1), einer stromab des Verdichters (1) angeordneten Brennkammer (2), einer stromab der Brennkammer (2) angeordneten Gasturbine (3), einem stromab der Gasturbine (3) angeordneten Abhitzekessel (4), sowie wenigstens einem an die Gasturbine (3) angekoppelten Generator (8) besteht,
**dadurch gekennzeichnet, dass**
erste Mittel (12) angeordnet sind, welche es erlauben, alternativ oder ergänzend Heissgas in den Heissgaspfad (23) zwischen Gasturbine (3) und Abhitzekessel (4) einzuschleusen, und dass zweite Mittel (15) angeordnet sind, welche es erlauben, alternativ oder ergänzend stromab des Abhitzekessels (4) Abgas aus dem Abgaspfad (40) auszuschleusen.

2. Krafterzeugungsanlage nach Anspruch 1, **dadurch gekennzeichnet, dass** es sich bei den ersten und zweiten Mitteln (12, 15) um Umschaltorgane handelt, welche das Ein- respektive Ausschleusen insbesondere über das Umstellen von Luftklappen erlauben.

3. Krafterzeugungsanlage nach einem der vorhergehenden Ansprüche, **dadurch gekennzeichnet, dass** das zusätzliche, alternativ oder ergänzend in den Heissgaspfad (23) einzuschleusende Heissgas von einem oder mehreren Hilfsbrennern (13) zur Verfügung gestellt wird, welche bevorzugt über ein Gebläse (14) mit Frischluft (34) versorgt werden.

4. Krafterzeugungsanlage nach einem der vorhergehenden Ansprüche, **dadurch gekennzeichnet, dass** es sich um einen CO₂/H₂O-Gasturbinenkreislauf handelt, bei welchem entstehendes CO₂ und H₂O über entsprechende Mittel zur Kompression (6) und/oder Mittel zur Kühlung (7) aus dem Gasturbinenkreislauf insbesondere bevorzugt unmittelbar stromab des Verdichters (1) abzweigend und insbesondere in flüssiger und/oder überkritischer Form entfernt wird, und dass der Gasturbinenkreislauf insbesondere über eine Luftzerlegungsanlage (9) mit weitgehend reinem Sauerstoff versorgt wird.

5. Krafterzeugungsanlage nach Anspruch 4, **dadurch gekennzeichnet, dass** es sich bei der Luftzerlegungsanlage (9) um kryogene oder eine auf Membranverfahren basierende Anlage handelt.

6. Krafterzeugungsanlage nach einem der vorhergehenden Ansprüche, **dadurch gekennzeichnet, dass** der Dampfturbinenkreislauf im wesentlichen geschlossen ausgebildet ist und wenigstens eine Dampfturbine (10,19) und wenigstens einen daran angekoppelten Generator (11) aufweist, und dass der Dampfturbinenkreislauf unter alleiniger Verwendung von über die ersten Mittel eingeschleustem Heissgas bei gleichzeitiger Ausschleusung über die zweiten Mittel derart betrieben werden kann, dass der Generator (11) genügend Energie erzeugt, um die Gasturbinenanlage (1-3) und eine ggf. vorhandene Luftzerlegungsanlage (9) in Betrieb zu nehmen, respektive um bei Ausfall der Gasturbinenanlage (1-3) als Notstromaggregat zu dienen.

7. Krafterzeugungsanlage nach Anspruch 6, **dadurch gekennzeichnet, dass** für das Anfahren der Gasturbine ein weiteres Umschaltorgan (17) stromauf des Verdichters (1) angeordnet ist, über welches Umgebungsluft (39) angesaugt werden kann.

8. Krafterzeugungsanlage nach einem der vorhergehenden Ansprüche, **dadurch gekennzeichnet, dass** es sich bei der im Dampfturbinenkreislauf angeordneten Dampfturbine um eine Kondensationsturbine (10) handelt.

9. Krafterzeugungsanlage nach einem der vorhergehenden Ansprüche, **dadurch gekennzeichnet, dass** der Dampfturbinenkreislauf eine Gegendruckturbine (19) umfasst, deren teilentspannter Abdampf in der Gasturbine (3) nach Einspritzung in das Kreislaufmedium vor, in, und/oder nach der Brennkammer (2) unter Leistungsabgabe bis auf Umgebungsdruck entspannt wird, wobei insbesondere ein Umschaltorgan (18) vorgesehen ist, mit welchem der Abdampf an der Gasturbine vorbei direkt zur Verflüssigung in einen im Gasturbinenkreislauf angeordneten Kühler (5) geleitet werden kann.

10. Verfahren zur Inbetriebnahme einer Krafterzeugungsanlage nach einem der Ansprüche 1 bis 9, **dadurch gekennzeichnet, dass** zunächst in einer ersten Phase der Dampfturbinenkreislauf mit über die ersten Mittel (12) eingeschleustem Heissgas bei gleichzeitiger wenigstens teilweiser Ausschleusung der Abgase über die zweiten Mittel (15) in Betrieb genommen wird, dann in einer zweiten Phase ein im Dampfturbinenkreislauf angeordneter Generator (11) den Generator (8) des Gasturbinenkreislaufs motorisch mit Strom zum Anfahren der Turbogruppe (1,3) antreibt, wobei der Verdichter (1) über eine stromauf angeordnete Luftklappe (17) und/oder über die in beide Richtungen geöffneten zweiten Mittel (15) Frischluft oder ein Verbrennungsgasgemisch ansaugt, durch die Brennkammer (2) fördert, in welcher ggf. unter zusätzlicher Zufuhr von weitgehend reinem Sauerstoff Brennstoff verfeuert wird, sodass die Turbine (3) den motorisch angetriebenen Generator (8) zu unterstützen beginnt, und schliesslich als alleiniger Antrieb dient, wobei die heißen Abgase der Gasturbine (3) sukzessive und am Ende vollständig die Dampferzeugung im Abhitzekessel (4) übernehmen.

11. Verfahren zur Inbetriebnahme einer Krafterzeugungsanlage nach einem der Ansprüche 1 bis 9, **dadurch gekennzeichnet, dass** zunächst in einer ersten Phase der Dampfturbinenkreislauf mit über die ersten Mittel (12) eingeschleustem Heissgas bei gleichzeitiger wenigstens teilweiser Ausschleusung der Abgase über die zweiten Mittel (15) in Betrieb genommen wird, dass nach erfolgtem Selbstlauf der über eine stromauf des Verdichters (1) angeordnete Luftklappe (17) mit Luft als Ersatzmedium betriebenen Turbogruppe (1-3, 8) in einer zweiten Phase über die ersten und zweiten Mittel (12, 15) und die Luftklappe (17) der Gasturbinenkreislauf geschlossen und der Brennkammer (3) weitgehend reiner Sauerstoff als Oxidationsmittel zugeführt wird, wobei kontinuierlich Gas aus dem Kreislauf ausgeschleust wird, um die Zufuhr von Sauerstoff und Brennstoff zu kompensieren, und wobei sich die Zusammensetzung des umlaufenden Gases sukzessive einem Gleichgewicht nähert, in dem mit der Separation und Verflüssigung der Verbrennungsprodukte begonnen werden kann.

12. Verfahren nach Anspruch 11, **dadurch gekennzeichnet, dass** es sich beim Gasturbinenkreislauf um einen CO₂/H₂O-Gasturbinenkreislauf handelt, und dass die Separation und Verflüssigung von überschüssigem Kohlendioxid begonnen werden kann, indem das Kohlendioxid in einem Kompressor (6) auf den für die weitere Verwendung benötigten Druck gebracht und in einem Kühler (7) weiter getrocknet und verflüssigt wird.

13. Verfahren nach einem der Ansprüche 10 bis 12, **dadurch gekennzeichnet, dass** der nach der ersten Phase über den Generator (11) verfügbare Strom wenigstens teilweise zum Betrieb der Luftzerlegungsanlage (9) und damit zur Bereitstellung von weitgehend reinem Sauerstoff für den Verbrennungsprozess in der Brennkammer (2) verwendet wird.

14. Verfahren nach einem der Ansprüche 10 bis 13, **dadurch gekennzeichnet, dass** während oder nach der ersten Phase ein großer Teil der Anfahrleistung in Form von Wärme mit Hilfe der Hilfsbrenner (13) zur Verfügung gestellt wird.

15. Verfahren zum Betrieb einer Krafterzeugungsanlage nach einem der Ansprüche 1 bis 9, **dadurch gekennzeichnet, dass** bei nicht betriebenem Gasturbinenkreislauf nur der Dampfturbinenkreislauf über die Einschleusung von Heissluft mit den ersten Mitteln (12) und über die Ausschleusung von Abgasen mit den zweiten Mitteln (15) betrieben wird, und dass so der im Dampfturbinenkreislauf angeordnete Generator (11) Strom insbesondere im Sinne eines Notstromaggregates zur Verfügung stellt.

## Claims

1. Power generation plant having at least one gas turbine cycle with heat-recovery boiler (4) and at least one steam turbine cycle operated via the heat-recovery boiler (4), the gas turbine cycle being designed to be semi-closed and essentially free of emissions and essentially comprising a compressor (1), a combustion chamber (2) arranged downstream of the compressor (1), a gas turbine (3) arranged downstream of the combustion chamber (2), a heat-recovery boiler (4) arranged downstream of the gas turbine (3), and at least one generator (8) coupled to the gas turbine (3), **characterized in that** first means (12) are arranged which alternatively or additionally allow hot gas to be fed into the hot-gas path (23) between gas turbine (3) and heat-recovery boiler (4), and **in that** second means (15) are arranged which alternatively or additionally allow exhaust gas to be expelled from the exhaust-gas path (40) downstream of the heat-recovery boiler (4).

2. Power generation plant according to Claim 1, **characterized in that** the first and second means (12, 15) are switch-over members which allow the feeding-in or expelling in particular by resetting air flaps.

3. Power generation plant according to either of the preceding claims, **characterized in that** the additional hot gas, to be alternatively or additionally fed into the hot-gas path (23), is provided by one or more auxiliary burners (13) which are preferably supplied with fresh air (34) via a blower (14).

4. Power generation plant according to one of the preceding claims, **characterized in that** a CO₂/H₂O gas turbine cycle is involved in which CO₂ and H₂O produced, via corresponding means for compression (6) and/or means for cooling (7), are removed from the gas turbine cycle, in particular preferably in such a way as to branch off directly downstream of the compressor (1), and in particular in a liquid and/or supercritical form, and **in that** the gas turbine cycle is supplied with largely pure oxygen in particular via an air separation plant (9).

5. Power generation plant according to Claim 4, **characterized in that** the air separation plant (9) is a cryogenic plant or a plant based on a diaphragm process.

6. Power generation plant according to one of the preceding claims, **characterized in that** the steam turbine cycle is of essentially closed design and has at least one steam turbine (10, 19) and at least one generator (11) coupled thereto, and **in that** the steam turbine cycle, with the use solely of hot gas fed in via the first means, while gas is simultaneously expelled via the second means, can be operated in such a way that the generator (11) generates sufficient energy in order to put the gas turbine plant (1-3) and an air separation plant (9) possibly present into operation, or respectively in order to serve as emergency generating unit in the event of a failure of the gas turbine plant (1-3).

7. Power generation plant according to Claim 6, **characterized in that**, for starting up the gas turbine, a further switch-over member (17), via which ambient air (39) can be drawn in, is arranged upstream of the compressor (1).

8. Power generation plant according to one of the preceding claims, **characterized in that** the steam turbine arranged in the steam turbine cycle is a bottoming steam turbine (10).

9. Power generation plant according to one of the preceding claims, **characterized in that** the steam turbine cycle comprises a topping steam turbine (19), the partly expanded exhaust steam of which, after injection into the cycle medium upstream of, in and/or downstream of the combustion chamber (2), is expanded to ambient pressure in the gas turbine (3), with power being delivered, in particular a switch-over member (18) being provided with which the exhaust steam can be directed past the gas turbine directly for liquefaction into a cooler (5) arranged in the gas turbine cycle.

10. Method of starting up a power generation plant according to one of Claims 1 to 9, **characterized in that**, first of all, in a first phase, the steam turbine cycle is put into operation with hot gas fed in via the first means (12), while at the same time the exhaust gases are at least partly expelled via the second means (15), then, in a second phase, the generator (8) of the gas turbine cycle is motor-driven with current by a generator (11) arranged in the steam turbine cycle in order to start up the turboset (1, 3), the compressor (1), via an air flap (17) arranged upstream and/or via the second means (15) opened in both directions, drawing in fresh air or a combustion-gas mixture and delivering it through the combustion chamber (2), in which, possibly with additional feeding of largely pure oxygen, fuel is fired, so that the turbine (3) starts to assist the motor-driven generator (8) and finally serves as sole drive, the hot exhaust gases of the gas turbine (3) progressively taking over the steam generation in the heat-recovery boiler (4) and completely taking over the steam generation in the heat-recovery boiler (4) at the end.

11. Method of starting up a power generation plant according to one of Claims 1 to 9, **characterized in that**, first of all, in a first phase, the steam turbine cycle is put into operation with hot gas fed in via the first means (12), while at the same time the exhaust gases are at least partly expelled via the second means (15), **in that**, after the turboset (1-3, 8), operated with air as substitute medium via an air flap (17) arranged upstream of the compressor (1), is running in a self-sustaining manner, in a second phase, the gas turbine cycle is closed via the first and second means (12, 15) and the air flap (17), and largely pure oxygen is fed as an oxidizing agent to the combustion chamber (3), gas being continuously expelled from the cycle in order to compensate for the feed of oxygen and fuel, and the composition of the circulating gas progressively approaching an equilibrium, in which the separation and liquefaction of the combustion products can be started.

12. Method according to Claim 11, **characterized in that** the gas turbine cycle is a CO₂/H₂O gas turbine cycle, and **in that** the separation and liquefaction of excess carbon dioxide can be started by the carbon dioxide, in a compressor (6), being brought to the pressure required for further use and being further dried and liquefied in a cooler (7).

13. Method according to one of Claims 10 to 12, **characterized in that** the current available after the first phase via the generator (11) is at least partly used for operating the air separation plant (9) and thus for providing largely pure oxygen for the combustion process in the combustion chamber (2).

14. Method according to one of Claims 10 to 13, **characterized in that**, during or after the first phase, a large proportion of the start-up output is made available in the form of heat by means of the auxiliary burners (13).

15. Method of operating a power generation plant according to one of Claims 1 to 9, **characterized in that**, when the gas turbine cycle is not operating, only the steam turbine cycle is operated via the feeding-in of hot air with the first means (12) and via the expelling of exhaust gases with the second means (15), and **in that** the generator (11) arranged in the steam turbine cycle thus provides current in particular in the sense of an emergency generating unit.

## Revendications

1. Centrale de génération de puissance présentant au moins un circuit de turbine à gaz avec une chaudière à chaleur perdue (4) et au moins un circuit de turbine à vapeur fonctionnant par le biais de la chaudière à chaleur perdue (4), le circuit de turbine à gaz étant à moitié fermé et étant réalisé sensiblement sans émissions et se composant essentiellement d'un compresseur (1), d'une chambre de combustion (2) disposée en aval du compresseur (1), d'une turbine à gaz (3) disposée en aval de la chambre de combustion (2), d'une chaudière à chaleur perdue (4) disposée en aval de la turbine à gaz (3), ainsi que d'au moins un générateur (8) raccordé à la turbine à gaz (3),
**caractérisée en ce que**
des premiers moyens (12) sont prévus, lesquels permettent d'introduire en variante ou en complément, du gaz chaud dans le parcours de gaz chaud (23) entre la turbine à gaz (3) et la chaudière à chaleur perdue (4), et **en ce que** des deuxièmes moyens (15) sont prévus, lesquels permettent d'évacuer en variante ou en complément du gaz d'échappement en aval de la chaudière à chaleur perdue (4) hors du parcours de gaz d'échappement (40).

2. Centrale de génération de puissance selon la revendication 1, **caractérisée en ce que** les premiers et deuxièmes moyens (12, 15) sont des organes d'inversion qui permettent une introduction, respectivement une évacuation, notamment par le biais de l'ajustement de clapets d'air.

3. Centrale de génération de puissance selon l'une quelconque des revendications précédentes, **caractérisée en ce que** le gaz chaud supplémentaire, à introduire en variante ou en complément dans le parcours de gaz chaud (23) est fourni par un ou plusieurs brûleurs auxiliaires (13) qui sont alimentés en air frais (34) de préférence par le biais d'une soufflante (14).

4. Centrale de génération de puissance selon l'une quelconque des revendications précédentes, **caractérisée en ce qu'**il s'agit d'un circuit de turbine à gaz de CO₂/H₂O, dans lequel le CO₂ et le H₂O formés sont éliminés du circuit de turbine à gaz notamment de préférence directement en aval du compresseur (1) par dérivation et notamment sous forme liquide et/ou surcritique par le biais de moyens correspondants de compression (6) et/ou de moyens de refroidissement (7), et **en ce que** le circuit de turbine à gaz est alimenté en oxygène essentiellement pur notamment par le biais d'une installation de séparation d'air (9).

5. Centrale de génération de puissance selon la revendication 4, **caractérisée en ce que** l'installation de séparation d'air (9) est une installation cryogénique ou basée sur un procédé à membrane.

6. Centrale de génération de puissance selon l'une quelconque des revendications précédentes, **caractérisée en ce que** le circuit de turbine à vapeur est essentiellement fermé et présente au moins une turbine à vapeur (10, 19) et au moins un générateur (11) raccordé à celle-ci, et **en ce que** le circuit de turbine à vapeur peut être entraîné par utilisation unique de gaz chaud introduit par le biais des premiers moyens avec évacuation simultanée par le biais des deuxièmes moyens, de telle sorte que le générateur (11) produise suffisamment d'énergie pour faire fonctionner l'installation de turbine à gaz (1-3) et une installation de séparation d'air (9) éventuellement présente, respectivement pour servir de groupe de courant de secours dans le cas d'une panne de l'installation de turbine à gaz (1-3).

7. Centrale de génération de puissance selon la revendication 6, **caractérisée en ce qu'**un organe d'inversion (17) supplémentaire est disposé en amont du compresseur (1) pour faire démarrer la turbine à gaz, et permet d'aspirer de l'air ambiant (39).

8. Centrale de génération de puissance selon l'une quelconque des revendications précédentes, **caractérisée en ce que** la turbine à vapeur disposée dans le circuit de turbine à vapeur est une turbine à condensation (10).

9. Centrale de génération de puissance selon l'une quelconque des revendications précédentes, **caractérisée en ce que** le circuit de turbine à vapeur comprend une turbine à contre-pression (19) dont la vapeur d'échappement partiellement détendue est détendue jusqu'à la pression ambiante dans la turbine à gaz (3) après l'injection dans le fluide du circuit, avant, dans et/ou après la chambre de combustion (2) en fournissant de la puissance, un organe d'inversion (18) étant notamment prévu avec lequel la vapeur d'échappement peut être guidée devant la turbine à gaz directement en vue de sa liquéfaction dans un refroidisseur (5) disposé dans le circuit de turbine à gaz.

10. Procédé pour faire fonctionner une centrale de génération de puissance selon l'une quelconque des revendications 1 à 9, **caractérisé en ce que** d'abord, dans une première phase, le circuit de turbine à vapeur fonctionne avec du gaz chaud introduit par le biais des premiers moyens (12) avec évacuation simultanée au moins partielle des gaz d'échappement par le biais des deuxièmes moyens (15), puis, dans une deuxième phase, un générateur (11) disposé dans le circuit de turbine à vapeur entraîne le générateur (8) du circuit de turbine à gaz par moteur avec du courant pour faire démarrer le groupe générateur (1, 3), le compresseur (1) aspirant par le biais d'un clapet d'air (17) disposé en amont et/ou par le biais des deuxièmes moyens (15) ouverts dans les deux directions, de l'air frais ou un mélange de gaz de combustion, le refoulant à travers la chambre de combustion (2), dans laquelle éventuellement par apport supplémentaire d'oxygène essentiellement pur, le combustible est brûlé, de sorte que la turbine (3) commence à supporter le générateur (8) entraîné par moteur et serve finalement d'entraînement unique, les gaz d'échappement chauds de la turbine à gaz (3) assurant successivement et à la fin complètement, la génération de vapeur dans la chaudière à chaleur perdue (4).

11. Procédé pour faire fonctionner une centrale de génération de puissance selon l'une quelconque des revendications 1 à 9, **caractérisé en ce que** d'abord, dans une première phase, le circuit de turbine à vapeur fonctionne avec du gaz chaud introduit par le biais des premiers moyens (12) avec évacuation simultanée au moins partielle des gaz d'échappement par le biais des deuxièmes moyens (15), **en ce qu'**après le lancement autonome réussi du groupe générateur (1-3, 8) entraîné avec de l'air comme fluide supplémentaire par le biais d'un clapet d'air (17) disposé en amont du compresseur (1), dans une deuxième phase, le circuit de turbine à gaz est fermé par le biais des premiers et deuxièmes moyens (12, 15) et du clapet d'air (17) et de l'oxygène essentiellement pur servant de moyen d'oxydation est introduit dans la chambre de combustion (3), du gaz étant évacué en continu hors du circuit, afin de compenser l'apport d'oxygène et de combustible, et la composition du gaz en circulation approchant successivement un équilibre dans lequel on peut commencer à effectuer la séparation et la liquéfaction des produits de la combustion.

12. Procédé selon la revendication 11, **caractérisé en ce que** le circuit de turbine à gaz est un circuit de turbine à gaz à CO₂/H₂O, et **en ce que** la séparation et la liquéfaction du dioxyde de carbone en excès peut commencer en amenant le dioxyde de carbone dans un compresseur (6) à la pression nécessaire pour son utilisation ultérieure et en le séchant et en le liquéfiant ensuite dans un refroidisseur (7).

13. Procédé selon l'une quelconque des revendications 10 à 12, **caractérisé en ce que** le courant disponible après la première phase par le biais du générateur (11) est utilisé au moins en partie pour faire fonctionner l'installation de séparation d'air (9) et ainsi pour fournir de l'oxygène essentiellement pur pour le processus de combustion dans la chambre de combustion (2).

14. Procédé selon l'une quelconque des revendications 10 à 13, **caractérisé en ce que** pendant ou après la première phase, une grande partie de la puissance de démarrage est fournie sous forme de chaleur à l'aide des brûleurs auxiliaires (13).

15. Procédé pour faire fonctionner une centrale de génération de puissance selon l'une quelconque des revendications 1 à 9, **caractérisé en ce que** lorsque le circuit de turbine à gaz n'est pas en fonctionnement, seulement le circuit de turbine à vapeur est entraîné par le biais de l'introduction d'air chaud par les premiers moyens (12) et par le biais de l'évacuation des gaz d'échappement par les deuxièmes moyens (15), et **en ce que** le générateur (11) disposé dans le circuit de turbine à vapeur fournit donc du courant notamment au sens d'un groupe de courant de secours.
